Europäisches Patentamt

European Patent Office

Office européen des brevets

(11) Publication number: **0 342 872**
A2

(12) **EUROPEAN PATENT APPLICATION**

(21) Application number: 89304818.1

(22) Date of filing: 12.05.89

(51) Int. Cl.⁴: **B29C 33/10 , B22C 9/06**

(30) Priority: 16.05.88 JP 120139/88

(43) Date of publication of application:
23.11.89 Bulletin 89/47

(84) Designated Contracting States:
DE ES FR GB IT

(71) Applicant: YUGEN KAISHA YAMAZAKI
KOUSAKUSHO
1-3 Takatsukadai 3-chome
Nishiku Kobe(JP)

(72) Inventor: Yamazaki, Koziro
10, Ikeda Uemachi 10 Nagataku
Kobe(JP)

(74) Representative: Purvis, William Michael
Cameron et al
D. Young & Co. 10 Staple Inn
London WC1V 7RD(GB)

(54) A gas venting device.

(57) A gas venting device, for venting high pressure gas from a metal diecasting or plastics moulding mould having a mould cavity (5), comprises a gas escape valve (16) normally held open by pneumatic pressure supplied through a duct (19) to act on a piston (18) thereby to allow gas to vent from the mould cavity (5) via a duct (6) formed by inter engaged multi grooves (7) and projections and leading, via the gas escape valve (16), to a vent (13), until a back pressure of the melt acts on the head of the valve (16) and closes the valve (16).

**FIG.4**

## A GAS VENTING DEVICE

The invention relates to a gas venting device for use in metal diecasting and plastic moulding machines.

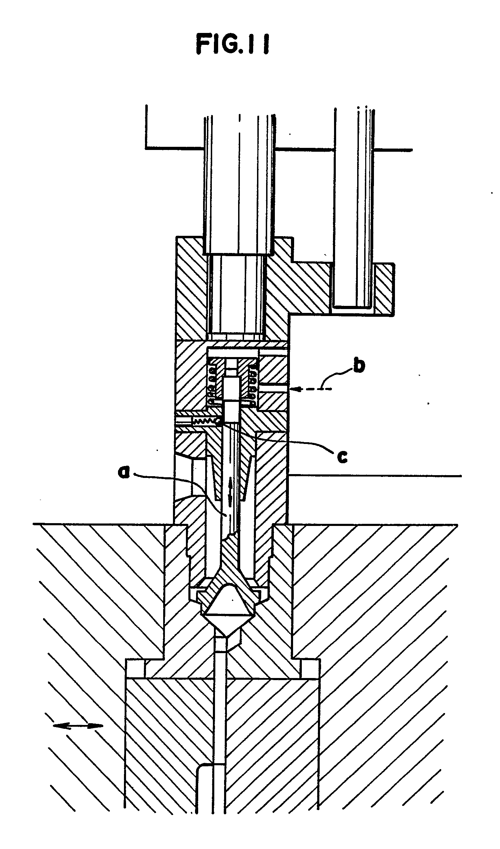

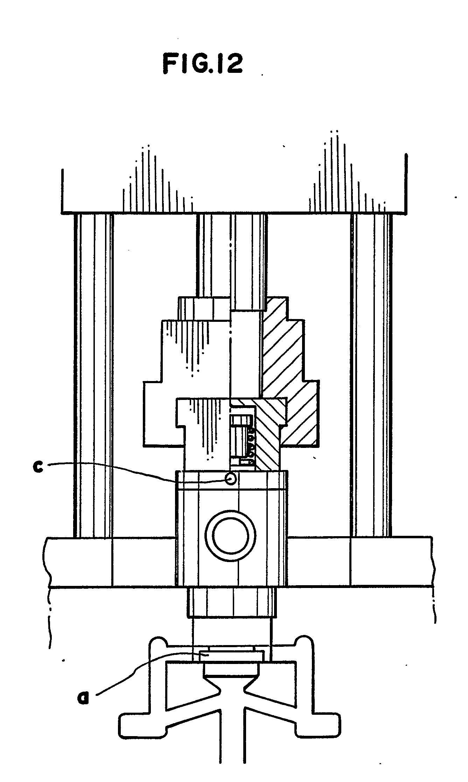

To explain the background to the invention, reference will be made to Figures 11 and 12, of the accompanying drawings which show a typical example of previously proposed gas venting devices.

The device illustrated has a gas escape valve a to vent gas from a mould. The valve a is constantly biased to a closed position by pneumatic pressure applied at b, and the valve is backed up by a steel ball c pressed by a spring with a stronger force than the pneumatic pressure. In this way the working position of the valve is maintained against any impact given upon the valve by such as molten metal or plastics.

In the gas venting of such kind a problem is that the pressure must be constantly applied to the valve a so as to close it, and the valve is kept closed by an overwhelming force over the pressure. Under this system the gas escape valve is very likely to close if any unexpected relatively strong force acts on the valve head. If it happens, a high pressure gas is continuously confined in the cavity of the mould.

According to the invention there is provided a gas venting device for use in metal diecasting or plastic moulding machines comprising at least one back pressure escape groove of zigzag form in the joint face of a first mould half, at least one back pressure escape projection of zigzag form on a joint face of a second mould half such that the back pressure escape groove and the back pressure escape projection inter engage to form a back pressure escape duct when the two mould halves abut together, a gas escape valve movably provided in the second mould half and connected to the back pressure escape duct, a casting cavity in the first mould half, a groove in each mould half which form a runner in the joint interface when the two mould halves are abutted, and a pressure supply duct to supply pneumatic pressure to the valve so as to keep it open by pneumatic pressure.

The gas escape valve of such a gas venting device can be readily openable to allow gas to pass through.

The invention is diagrammatically illustrated by way of example in the accompanying drawings, in which:-

Figure 1 is a plan view showing a movable mould half of a moulding machine including a gas venting device according to the invention;

Figure 2 is a perspective view of the movable mould half of Figure 1;

Figure 3 is a perspective view showing a fixed mould half to cooperate with the mould half of Figure 1 and 2;

Figure 4 is a cross-sectional view showing an assembly of the movable mould half and the fixed mould half taken on lines A-A in Figures 1 and 3;

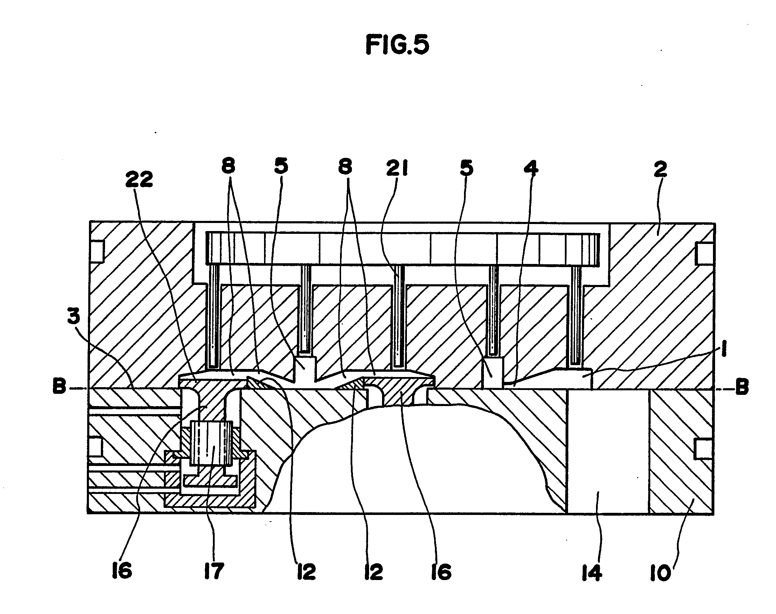

Figure 5 is a cross-sectional view taken on lines B-B in Figures 1 and 3;

Figure 6 is a view similar to Figure 4 showing a modified version of back pressure escape grooves;

Figures 7 and 8 are views similar to Figure 1 showing two further modified versions of back pressure escape grooves;

Figures 9 and 10 are views similar to Figure 4 showing two different modified versions of valve sections;

Figure 11 is a cross-sectional view through a gas venting device of previously proposed kind; and

Figure 12 is a side view of the gas venting device of Figure 11.

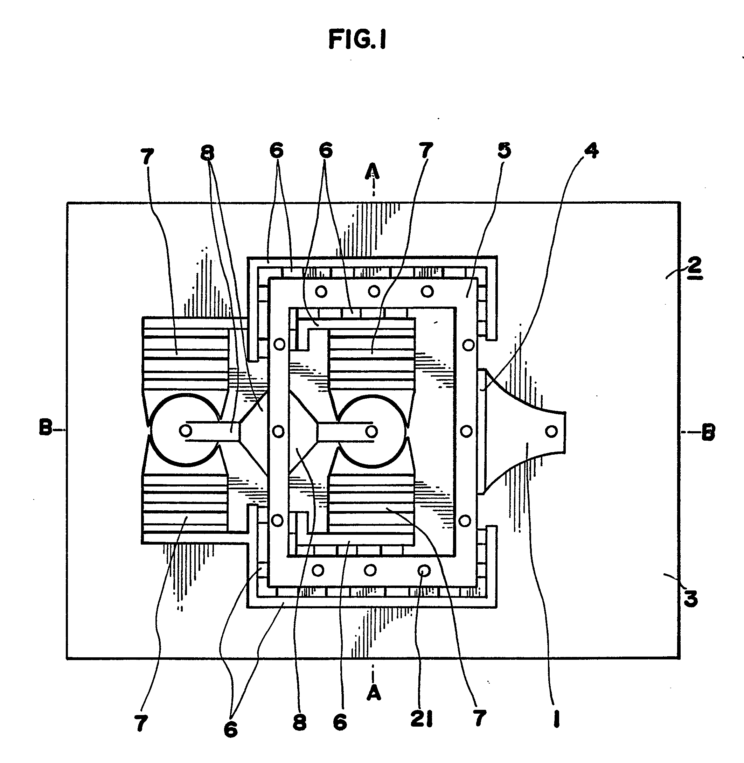

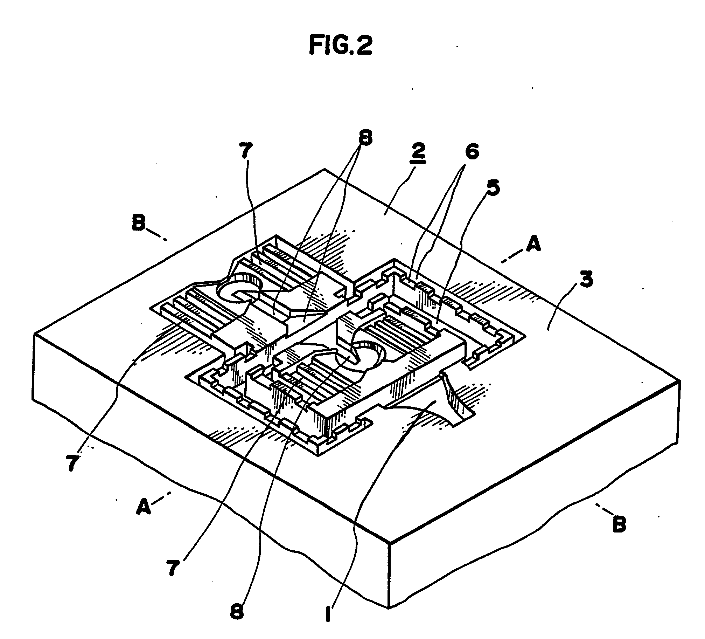

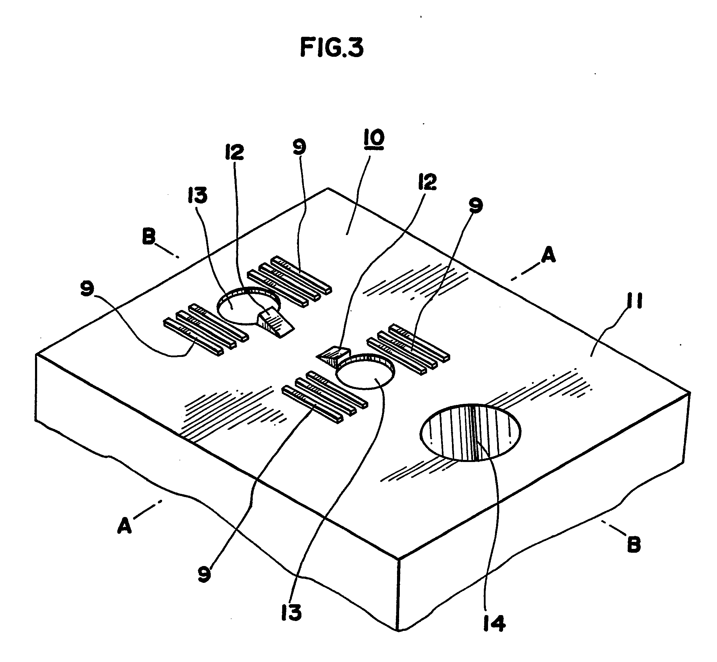

Referring to Figures 1 and 2, a gas venting device includes a primary runner 1 formed in a joint face 3 of a movable mould half 2. The runner 1 is connected to an outlet 4. A cavity 5 in which products are cast includes a gas vent escape ducts 6. Multiple grooves 7 are provided in the face 3 to form part of the back pressure escape ducts 6. The cavity 5 includes a secondary runner 8. Figure 3 shows a fixed mould half 10 which includes back pressure escape projections 9 formed on a joint face 11 which is complementary to the joint face 3 of the movable mould half 2. The projections 9 are formed so as to fit into the multiple grooves 7 of the movable mould half 2 and to form therewith the escape ducts 6. The secondary runner 8 includes ramps 12 formed on the joint face 11 of the fixed mould half 10. The ramps 12 are designed to allow a melt to rise up along their raised surface. The fixed mould half 10 includes gas vents 13 and has a pouring hole 14 connected to the primary runner 1.

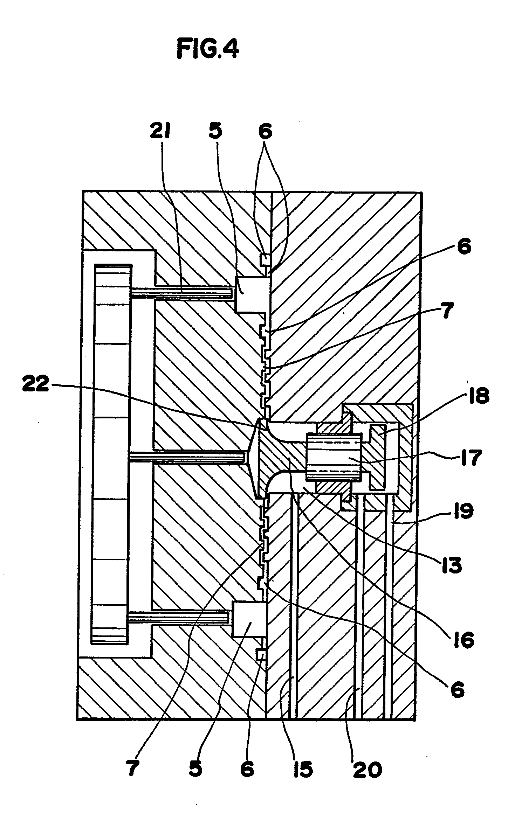

Referring to Figure 4, the fixed mould half 10 includes a second gas vent 15 connected to the first gas vents 13. A respective gas escape valve 16 is slidable in each of the gas vents 13. Each valve 16 is supported by a bearing 17, which is provided with a piston 18. The piston 18 can be biased to move the valve 16 to an open position by pneumatic pressure supplied through a first supply duct 19, whereas, if the valve 16 is to be closed, pneumatic pressure is supplied through a second supply duct 20. Ejector push rods 21 are slidable in the movable mould half 2. Each valve 16 has a head 22.

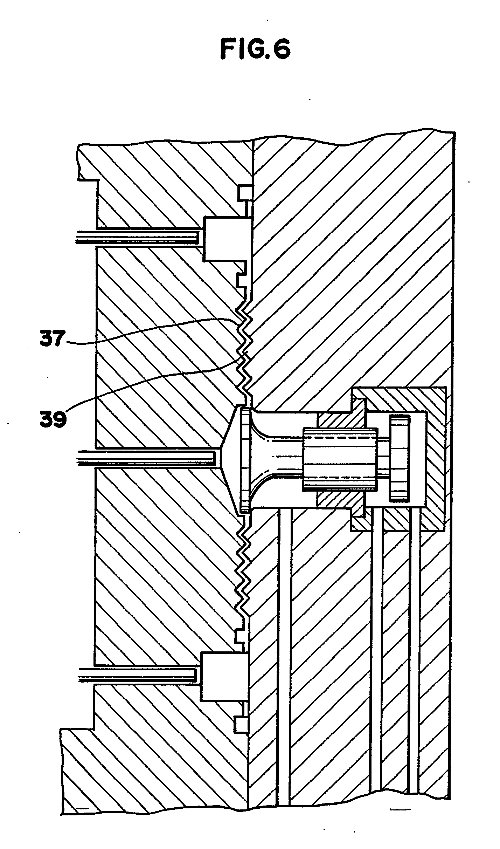

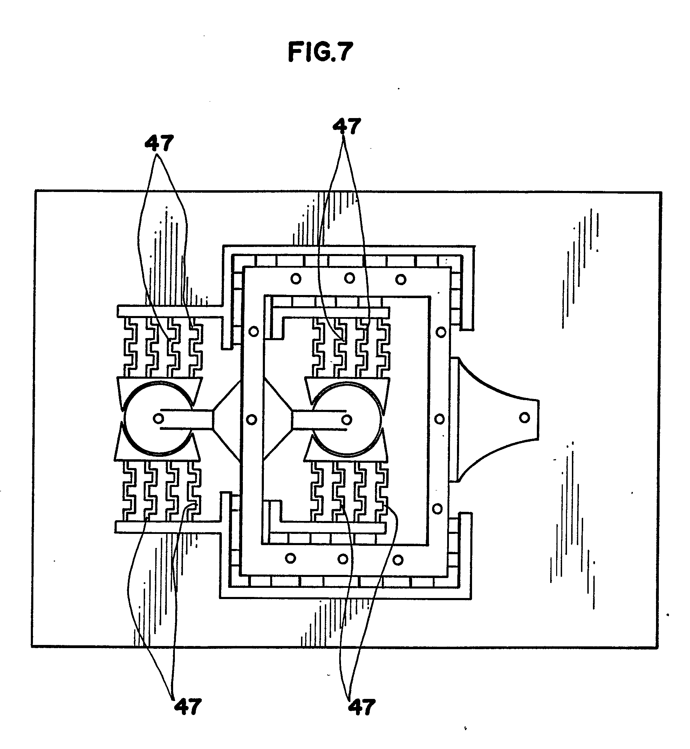

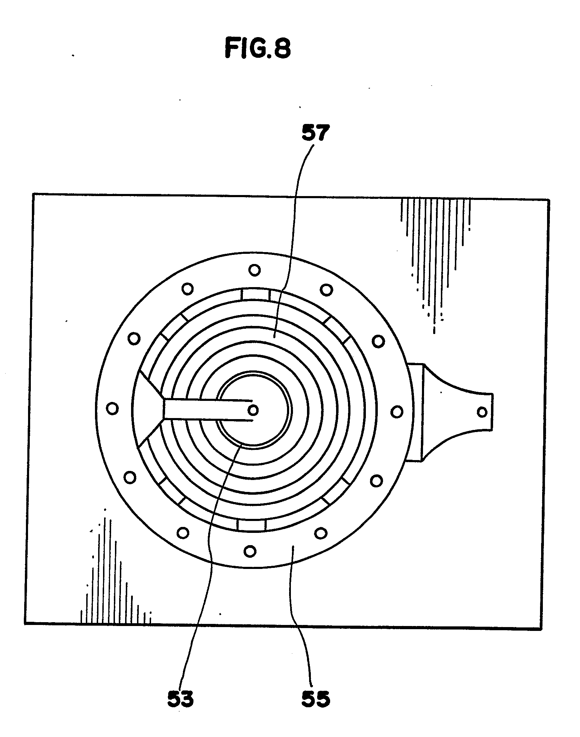

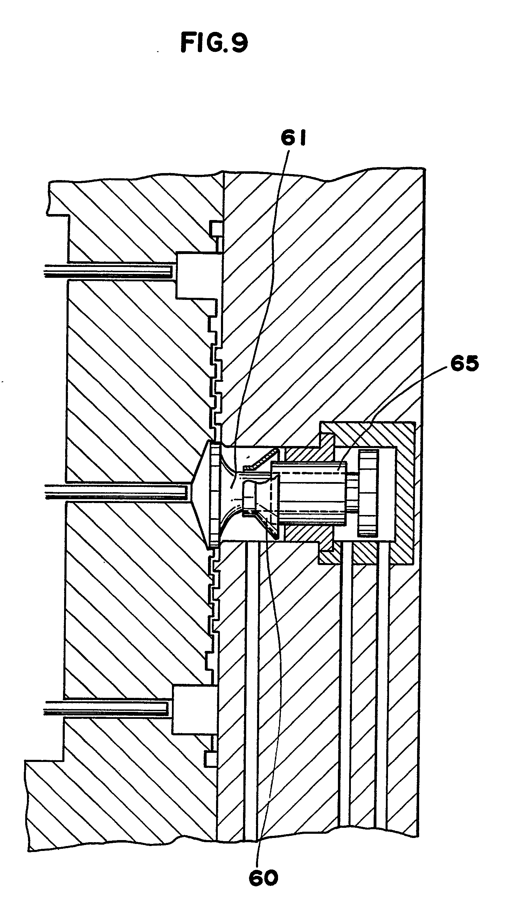

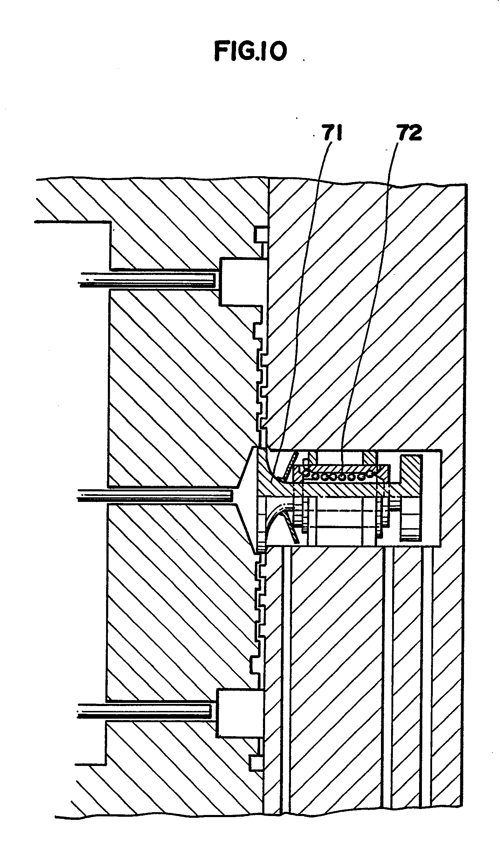

Figure 6 shows modified back pressure escape multi-grooves 37 and projections 39 each having a saw-tooth shape. Figure 7 shows further modified back pressure escape multi-grooves 47 formed in square-thread patterns. Figure 8 shows still further modified back pressure escape ring-shaped grooves 57 formed concentric with a gas escape duct 53, the ring-shaped grooves 57 communicating between a cavity 55 and a gas escape duct 53. Figure 9 shows a valve rod 61 covered with a cup-shaped cover 60 so as to protect the valve 16 against becoming stained with dirt. Figure 10 shows a valve rod 71 carried by a bearing 72 such that the valve rod 71 is smoothly slidable therein.

When the two mould halves 2 and 10 are pressed together face to face, the back pressure escape multi-grooves 7 and the projections 9 cooperate with each other to form the gas vents 6 having zigzag paths. Gas can pass through such zigzag paths but the melt will not be allowed to pass or will be greatly hindered because of its tenacity. As a result, pressure will build up on the cavity and urge the valve 16 to close. Therefore, to keep the valve 16 open a high pneumatic pressure can be applied thereto through the first supply duct 19 so as to overcome the closure-urging pressure which acts on the valve head. Only when a strong back pressure caused by the melt acts on the valve head will the valve be closed. Thus the valve is kept open to vent high pressure before it detrimentally builds up on the mould.

## Claims

1. A gas venting device for use in metal diecasting or plastics moulding machines comprising at least one back pressure escape groove (7, 37, 47, 57) of zigzag form in the joint face (3) of a first mould half (2), at least one back pressure escape projection (9, 39) of zigzag form on a joint face (11) of a second mould half (10) such that the back pressure escape groove (7, 37, 47, 57) and the back pressure escape projection (9, 39) inter engage to form a back pressure escape duct when the two mould halves (2, 10) abut together, a gas escape valve (16) movably provided in the second mould half (10) and connected to the back pressure escape duct, a casting cavity (5) in the first mould half (2), a groove in each mould half which form a runner in the joint interface (3, 11) when the two mould halves (2, 10) are abutted, and a pressure supply duct (19) to supply pneumatic pressure to the valve (16) so as to keep it open by pneumatic pressure.

2. A gas venting device according to claim 1, wherein the valve (16) is covered with a cover whereby the valve (16) is protected against dirt.

3. A gas venting device according to claim 1, wherein the valve (16) is carried by a bearing (17) whereby the valve (16) can move smoothly.

## FIG.1

# FIG.2

# FIG.3

# FIG.4

EP 0 342 872 A2

# FIG.5

# FIG.6

# FIG.7

# FIG.8

# FIG.9

# FIG.10

71    72

# FIG.11

# FIG.12